(19) Europäisches Patentamt
European Patent Office
Office européen des brevets

(11) EP 3 331 703 B1

(12) **EUROPEAN PATENT SPECIFICATION**

(45) Date of publication and mention of the grant of the patent:
**29.05.2019 Bulletin 2019/22**

(21) Application number: **16766855.7**

(22) Date of filing: **19.07.2016**

(51) Int Cl.:
***B32B 27/32*** *(2006.01)*
***C08J 5/18*** *(2006.01)*
***C08L 23/14*** *(2006.01)*
***B32B 7/04*** *(2019.01)*
***B32B 27/08*** *(2006.01)*
***B32B 27/16*** *(2006.01)*

(86) International application number:
**PCT/EP2016/067144**

(87) International publication number:
**WO 2017/021138 (09.02.2017 Gazette 2017/06)**

(54) **COMPOSITION COMPRISING PROPYLENE-ETHYLENE-1-BUTENE TERPOLYMERS**

ZUSAMMENSETZUNG MIT PROPYLEN-ETHYLEN-1-BUTEN-TERPOLYMEREN

COMPOSITION COMPRENANT DES TERPOLYMÈRES DE PROPYLÈNE-ÉTHYLÈNE-1-BUTÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2015 EP 15180040**

(43) Date of publication of application:
**13.06.2018 Bulletin 2018/24**

(73) Proprietor: **Basell Poliolefine Italia S.r.l.**
**20121 Milano (IT)**

(72) Inventors:
- **FELISATI, Andrea**
  **44122 Ferrara (IT)**
- **FERRARO, Angelo**
  **44122 Ferrara (IT)**
- **MASSARI, Paola**
  **44122 Ferrara (IT)**
- **CIARAFONI, Marco**
  **44122 Ferrara (IT)**
- **CAVALIERI, Claudio**
  **44122 Ferrara (IT)**
- **PANTALEONI, Roberto**
  **44122 Ferrara (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**EP-A1- 0 674 991**
**EP-A1- 2 743 307**
**EP-A1- 2 810 773**
**EP-A2- 0 203 727**
**EP-A2- 1 243 612**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present disclosure relates to a polyolefin composition comprising a propylene ethylene copolymer and a propylene ethylene 1-butene terpolymer fit to give films, in particular biaxially oriented films, having improved properties in terms of surface tension after corona treatment.

BACKGROUND OF THE INVENTION

Films made of propylene copolymers or terpolymers are known in the art.

Propylene copolymers or terpolymers are used because, with respect to propylene homopolymers, are characterized by a better impact, lower rigidity and better transparency. In some cases however, it is difficult to find the acceptable balance between those properties, particularly when properties contrasting to each other are desired. When certain softness is desired, for example, it is commonly obtained in the presence of high amount of xylene soluble fractions that make them unsuitable for food contact applications.

US Patent No. 6,221,984 discloses random copolymers of propylene with ethylene and at least one $C_4$-$C_{10}$ alpha-olefin and a process for preparing such random copolymers, which can be used in films, fibers or moldings. In particular, the terpolymers obtained by the process disclosed in this specification are particularly suitable for food packaging films because of their low proportions of xylene-soluble polymer particles (Examples 1-3). On the other hand, when the xylene soluble fraction is increased, the sealing initiation temperature and the optical properties become unsatisfactory.

WO2009/019169 relates to a propylene/ethylene/1-butene terpolymer prepared in a gas phase reactor comprising two interconnected polymerization zones. Said terpolymer has among other features the ratio between ethylene amount (wt%) and 1-butene amount (wt%) ranging from 0.1 to 0.8 and a xylene soluble fraction at 25 °C higher than 9 wt%.

WO2013/174778 relates to a propylene, ethylene, 1-butene terpolymer containing from 0.5 wt% to 2.2 wt% of ethylene derived units and from 6.0 wt% to 20.0 wt% of 1-butene derived units, wherein in particular the xylene soluble fraction at 25 °C is lower than 15.0 wt%, the minimum value being 5.0. Also in this case the balance between xylene soluble fraction and SIT can be further improved.

It is also known in the art that polyolefin films are characterized by poor wettability, poor printability and poor adhesion to other materials. These properties are associated with the low surface tension of polyolefin-based polymers and their high resistance to many chemicals and solvents. Typically, the surface tension of propylene films lies in the range from 27 to 30 mN/m.

In order to increase the surface tension to render the film receptive to metallization, coatings, printing inks, lamination, and the like or combinations thereof, several treatment of the surface are known in the art, including corona discharge, flame, plasma, chemical treatment, or treatment by means of a polarized flame.

What all of these procedures have in common is that, by exposure to reactive species generated, the polymer surface is partially and temporally modified with polar groups, thus making the surface more easily printable.

SUMMARY OF THE INVENTION

Now it has surprisingly been found that a polyolefin composition comprising a propylene ethylene copolymer and a propylene ethylene 1-butene terpolymer can be advantageously used to obtain films, in particular biaxially oriented films (BOPP), having higher surface tension after corona treatment.

Thus, the present disclosure concerns a polyolefin composition comprising:

A) from 19 wt% to 50 wt% of a propylene ethylene copolymer having an ethylene derived units content ranging from 1.5 wt% to 6.0 wt%;

B) from 50 wt% to 81 wt% of a propylene ethylene 1-butene terpolymer having an ethylene derived units content ranging from 1.5 wt% and 6.0 wt% and 1-butene derived units content of between 4.8 wt% and 12.4 wt%;

the sum of the amount of component A) and B) being 100;
the composition being characterized by the following features:

- C2wt%/C4wt% ratio of between 0.22 and 3.0, where C2wt% is the weight per cent of ethylene derived units and C4wt% is the weight per cent of 1-butene derived units;
- xylene soluble fraction at 25 °C comprised between 2 wt% and 15 wt%;
- molecular weight distribution (MWD), expressed in terms of Mw/Mn, greater than 4.0;

- recoverable compliance, measured at 200°C according to the procedure reported in the characterizing section, having a maximum value between 800 and 1200 seconds lower than $65x10^{-5}$ $Pa^{-1}$.

BRIEF DESCRIPTION OF THE DRAWINGS

In Figure 1 the recovery compliance versus time measured at 200°C according to the procedure reported in the characterizing section of Example 1 and Comparative Example 2 is reported.

DETAILED DESCRIPTION OF THE INVENTION

A polyolefin composition comprising:

A) from 19 wt% to 50 wt%, preferably from 25 wt% to 42 wt%, more preferably from 31 wt% to 38 wt% of a propylene ethylene copolymer having an ethylene derived units content ranging from 1.5 wt% to 6.0 wt%, preferably from 2.6 wt% to 5.2 wt%, more preferably from 3.1 wt% to 4.3 wt%;
B) from 50 wt% to 81 wt%, preferably from 58 wt% to 75 wt%, more preferably from 62 wt% to 69 wt% of a propylene ethylene 1-butene terpolymer having an ethylene derived units content ranging from 1.5 wt% and 6.0 wt%, preferably from 1.9 wt% to 4.8 wt%, more preferably from 2.1 wt% to 3.7 wt%, and 1-butene derived units content of between 4.8 wt% and 12.4 wt%, preferably from 5.1 wt% to 10.5 wt%, more preferably from 6.8 wt% to 10.0 wt%;

the sum of the amount of component A) and B) being 100;
the composition being characterized by the following features:

- C2wt%/C4wt% ratio of between 0.22 and 3.0, preferably of between 0.30 and 2.3, more preferably from 0.35 to 1.3, where C2wt% is the weight per cent of ethylene derived units and C4wt% is the weight per cent of 1-butene derived units;
- xylene soluble fraction at 25°C comprised between 2 and 15 wt%, preferably between 5 and 13 wt%, more preferably between 7 and 11.5 wt%;
- molecular weight distribution (MWD), expressed in terms of Mw/Mn, higher than 4.0, preferably below 10.0;
- recoverable compliance, measured at 200°C according to the procedure reported in the characterizing section, having a maximum value between 800 and 1200 seconds lower than $65x10^{-5}$ $Pa^{-1}$.

Preferably, the Melt Flow Rate (MFR 230°C 2.16kg) referred to the polyolefin composition as a reactor grade (i.e., copolymers that have not been subject to chemical or physical visbreaking) ranges from 0.5 to 75 g/10 min, preferably from 1.0 to 25.0 g/10 min, more preferably from 3.0 to 20.0 g/10 min, even more preferably from 4.0 to 18.0 g/10 min.
In particular, the polyolefin composition has preferably a melting temperature lower than 140 °C, more preferably lower than 136.8 °C.
Preferably, the polyolefin composition has a seal initiation temperature (SIT) comprised between 90 and 109 °C.
Propylene ethylene copolymer is defined as containing only propylene and ethylene comonomers and propylene ethylene 1-butene terpolymer is defined as containing only propylene, ethylene and 1-butene comonomers.
The polyolefin composition is particularly fit for the production of films, in particular biaxially oriented (BOPP) films. The BOPP film obtained with the polyolefin composition has higher surface tension after corona treatment.
The polyolefin composition herein disclosed can be prepared by a process comprising polymerizing propylene with ethylene and propylene with ethylene and 1-butene, in the presence of a catalyst comprising the product of the reaction between:

(i) a solid catalyst component comprising Ti, Mg, Cl, and an electron donor compound (internal donor);
(ii) an alkylaluminum compound and,
(iii) an electron-donor compound (external donor).

The particles of solid component have substantially spherical morphology and average diameter ranging between 5 μm and 150 μm, preferably from 20 μm to 100 μm and more preferably from 30 μm to 90 μm. As particles having substantially spherical morphology, those are meant wherein the ratio between the greater axis and the smaller axis is equal to or lower than 1.5 and preferably lower than 1.3.
In general the amount of Mg preferably ranges from 8 to 30% more preferably from 10 wt% to 25 wt%.
Generally, the amount of Ti ranges from 0.5 wt% to 5 wt% and more preferably from 0.7 wy% to 3 wt%.
Internal electron donor compounds are 1,3-diethers of formula:

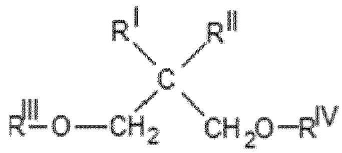

wherein $R^I$ and $R^{II}$ are the same or different and are $C_1$-C1$_8$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

The Mg/Ti molar ratio is preferably equal to, or higher than, 13, preferably in the range 14-40, and more preferably from 15 to 40. Correspondingly, the Mg/donor molar ratio is preferably higher than 16 more preferably higher than 17 and usually ranging from 18 to 50.

The preparation of the solid catalyst component can be carried out according to several methods.

According to one method, the solid catalyst component can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130 °C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with $TiCl_4$ can be carried out one or more times. The internal electron donor compound can be added in the desired ratios during the treatment with $TiCl_4$.

The alkylaluminum compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and is generally comprised between 50 and 2000.

Suitable external electron-donor compounds include silicon compounds, ethers, esters, amines, heterocyclic compounds and particularly 2,2,6,6-tetramethylpiperidine and ketones.

A preferred class of external donor compounds is that of silicon compounds of formula $(R_6)_a(R_7)_bSi(OR_8)_c$, where a and b are integers from 0 to 2, c is an integer from 1 to 4 and the sum (a+b+c) is 4; $R_6$, $R_7$, and $R_8$ are alkyl, cycloalkyl or aryl radicals with 1-18 carbon atoms optionally containing heteroatoms. Particularly preferred are the silicon compounds in which a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)-(2-ethylpiperidinyl)-dimethoxysilane, methyl(3,3,3-trifluoro-n-propyl)dimethoxysilane. Moreover, the silicon compounds in which a is 0, c is 3, $R_7$ is a branched alkyl or cycloalkyl group, optionally containing heteroatoms, and $R_8$ is methyl are also preferred. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

The polymerization process can be carried out according to known techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is generally carried out at temperature of from 20 to 120 °C, preferably of from 40 to 80 °C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.

The polyolefin composition of the present disclosure may also contain the additives that are commonly used for the film manufacturing, such as anti-oxidants, process stabilizers, slip agents, antistatic agents, antiblock agents.

The polyolefin composition can be used to prepare mono- or multilayer films according to well-known processes and techniques.

In particular, extrusion processes can be used.

In extrusion processes the polymer material to be used is molten in an extruder and extruded through a narrow die slit. Subsequent from the exit from the die, the material can be cooled, heated and optionally oriented in several ways or in combination.

Examples of such processes are cast, blown, extrusion coating, uniaxially oriented, simultaneous biaxially oriented and sequential biaxially oriented film processes.

Specific examples of such processes are the blown film and BOPP processes.

The following examples are given in order to better illustrate the disclosure and are not intended to limit it in any way.

EXAMPLES

CHARACTERIZATIONS

**Determination of Xylene Soluble fraction**

2.5 g of polymer and 250 mL of o-xylene are introduced in a glass flask equipped with a refrigerator and a magnetical stirrer. The temperature is raised in 30 minutes up to the boiling point of the solvent. The so obtained solution is then kept under reflux and stirring for further 30 minutes. The closed flask is then kept for 30 minutes in a bath of ice and water and in thermostatic water bath at 25 °C for 30 minutes as well. The solid thus obtained is filtered on quick filtering paper and 100 ml of the filtered liquid is poured in a previously weighed aluminum container, which is heated on a heating plate under nitrogen flow, to remove the solvent by evaporation. The container is then kept on an oven at 80 °C under vacuum until constant weight is obtained. The residue is weighed to determine the percentage of xylene-soluble polymer.

**Molecular weight distribution MWD (Mw/Mn)**

Molecular weights and molecular weight distribution were measured at 150 °C using a Waters Alliance GPCV/2000 instrument equipped with four mixed-bed columns PLgel Olexis having a particle size of 13 μm. The dimensions of the columns were 300 × 7.8 mm. The mobile phase used was vacuum distilled 1,2,4-trichlorobenzene (TCB) and the flow rate was kept at 1.0 ml/min. The sample solution was prepared by heating the sample under stirring at 150 °C in TCB for one to two hours. The concentration was 1 mg/ml. To prevent degradation, 0.1 g/l of 2,6-di-*tert*-butyl-*p*-cresol were added. 300 μl (nominal value) of solution were injected into the column set. A calibration curve was obtained using 10 polystyrene standard samples (EasiCal kit by Agilent) with molecular weights in the range from 580 to 7 500 000 Da. It was assumed that the $K$ values of the Mark-Houwink relationship were:

$K$= 1.21 × $10^{-4}$ dl/g and $\alpha$ = 0.706 for the polystyrene standards,
$K$ = 1.90 × $10^{-4}$ dl/g and $\alpha$ = 0.725 for the experimental samples.

A third order polynomial fit was used for interpolate the experimental data and obtain the calibration curve. Data acquisition and processing was done by using Waters Empowers 3 Chromatography Data Software with GPC option.

**Melt flow rate (MFR)**

The melt flow rate MFR of the polymer composition was determined according to ISO 1133 (230 °C, 2.16 Kg).

**Determination of the comonomer content**

The comonomers content has been determined by infrared spectroscopy by collecting the IR spectrum of the sample vs. an air background with a Fourier Transform Infrared spectrometer (FTIR); the instrument data acquisition parameters are:

- purge time: 30 seconds minimum
- collect time: 3 minutes minimum
- apodization: Happ-Genzel
- resolution: 2 $cm^{-1}$.

Sample Preparation:

Using a hydraulic press, a thick sheet is obtained by pressing about 1 g of sample between two aluminum foils. If homogeneity is in question, a minimum of two pressing operations are recommended. A small portion is cut from this sheet to mold a film. Recommended film thickness ranges between 0.02 and0.05 cm (8 - 20 mils).
Pressing temperature is 180±10 °C (356 °F) and about 10 $kg/cm^2$ (142.2 PSI) pressure.
After about 1 minute the pressure is released and the sample is removed from the press and cooled to room temperature.
The spectrum of a pressed film of the polymer is recorded in absorbance vs. wavenumbers ($cm^{-1}$). The following measurements are used to calculate ethylene and 1-butene content:

- Area (At) of the combination absorption bands between 4482 and 3950 $cm^{-1}$ is used for spectrometric normalization of film thickness.
- AC2 is the area of the absorption band between 750-700 $cm^{-1}$ after two proper consecutive spectroscopic subtractions of an isotactic non additivate polypropylene spectrum and then of a reference spectrum of a 1-butene-propylene random copolymer in the range 800-690 $cm^{-1}$.
- DC4 is the height of the absorption band at 769 $cm^{-1}$ (maximum value), after two proper consecutive spectroscopic subtractions of an isotactic non additivate polypropylene spectrum and then of a reference spectrum of an ethylene-propylene random copolymer in the range 800-690 $cm^{-1}$.

In order to calculate the ethylene and 1-butene content calibration straights lines for ethylene and 1-butene obtained by using samples of known amount of ethylene and 1-butene are needed. Calibration of ethylene:
Calibration straight line GC2 is obtained by plotting AC2 /At versus ethylene molar percent (%C2m). The slope of GC2 is calculated from a linear regression.

Calibration of 1-butene:

Calibration straight line GC4 is obtained by plotting DC4 /At versus 1-butene molar percent (%C4m). The slope of GC4 is calculated from a linear regression.
Spectrum of the unknown sample is recorded and then (At), (AC2) and (DC4) of the unknown sample are calculated. The ethylene content (% molar fraction C2m) of the sample is calculated as follows:

$$\%C2m = \frac{1}{G_{C2}} \cdot \frac{A_{C2}}{A_t}$$

The 1-butene content (% molar fraction C4m) of the sample is calculated as follows:

$$\%C4m = \frac{1}{G_{C4}} \cdot \left(\frac{A_{C4}}{A_t} - I_{C4}\right)$$

The propylene content (molar fraction C3m) is calculated as follows:

$$C3m = 100 - \%C4m - \%C2m$$

The ethylene, 1-butene contents by weight are calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

**Melting temperature via Differential Scanning Calorimetry (DSC)**

The melting temperature of the polymers (Tm) was measured by Differential Scanning Calorimetry (D.S.C.) on a Perkin Elmer DSC-1 calorimeter, previously calibrated against indium melting point, and according to ISO 11357-1, 2009 and 11357-3, 2011, at 20 °C/min. The weight of the samples in every DSC crucible was kept at 6.0 ± 0.5 mg.

In order to obtain the melting point, the weighted sample was sealed into aluminium pans and heated to 200°C at 20°C/minute. The sample was kept at 200 °C for 2 minutes to allow a complete melting of all the crystallites, then cooled to 5 °C at 20 °C/minute. After standing 2 minutes at 5 °C, the sample was heated for the second run time to 200 °C at 20 °C/min. In this second heating run, the peak temperature (Tp,m) was taken as the melting temperature.

**Determination of Haze**

An about 5x5 cm 50 μm thick film specimen prepared by extruding each test composition in a single screw Collin extruder (length/diameter ratio of screw 1:25) at a film drawing speed of 7 m/min and a melt temperature of 210-250 °C has been used. The haze value is measured using a Gardner photometric unit connected to a Hazemeter type UX-10 or an equivalent instrument having G.E. 1209 light source with filter "C". Reference samples of known haze are used for calibrating the instrument.

**Determination of the surface tension**

The determination of the surface tension is measured according to ASTM D2578-09.

**Seal Initiation Temperature (SIT)**

Preparation of the film specimens:

The polyolefin composition of the disclosure has been used to produce a A/B/C multilayer film wherein the A layer is the polymer of Example 1, the B layer is a propylene homopolymer MOPLEN HP522H sold by Lyondellbasell and the C layer is the polymer of Comparative Example 2. The processing parameters are reported in Table 1.

Table 1

| | | Layer thickness | Melt temperature | Line speed |
|---|---|---|---|---|
| | | µm | °C | m/min |
| **Layer A** | Internal sealing later | 1 | 244 | 36 |
| **Layer B** | Core | 28 | 263 | |
| **Layer C** | Outside layer | 1 | 259 | |

The multilayer film has been stretched with a ratio 5.1:1.

For comparison, also a C/B/C multilayer film, wherein the C layer is the polymer of Comparative Example 2 and the B layer is a propylene homopolymer MOPLEN HP522H sold by Lyondellbasell, was produced. The processing parameters are reported in Table 2.

Table 2

| | | Layer thickness | Melt temperature | Line speed |
|---|---|---|---|---|
| | | µm | °C | m/min |
| **Layer C** | Internal sealing later | 1 | 259 | 36 |
| **Layer B** | Core | 28 | 263 | |
| **Layer C** | Outside layer | 1 | 259 | |

Determination of the SIT:

For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 5 seconds at a pressure of 0.1 N/$mm^2$. The sealing temperature is increased of 1 °C for each seal, starting from about 30 °C less than the melting temperature of the test composition. The sealed samples are left to cool and then their unsealed ends are attached to an Instron machine where they are tested at a traction speed of 50 mm/min.

The SIT is the minimum sealing temperature at which the seal does not break when a load of at least 2 Newton is applied in the said test conditions.

**Determination of the recoverable compliance**

Recoverable compliance has been determined with creep and recovery measurements by using a Physica MCR301 rheometer having a cone plate geometry of 25 mm of radius and an angle of measuring cone of 1.992° grades with the cone plate on the top. The temperature of the tests is of 200 °C.

Determination of the creep time

The complex viscosity was determined in a frequency sweep test from 100 rad/s to 0.01 rad/s at constant strain of 5% and the value at frequency of 0.01 rad/s was chosen to calculate the creep time (no time setting in the profile). The creep time has been then calculated by using the formula:

$$\text{Creep time} = \text{complex viscosity@0.01rad/s} / 100; \quad [1]$$

wherein 100 is the applied stress in Pascal.

Determination of recovery time

The recovery time has been calculated according to the following formula:

$$\text{Recovery time}=\text{Creep time}*7\ [2]$$

Creep and recovery test

a) creep

The creep has been measured once a second for a maximum of seconds according to the creep time calculated in [1]. The shear stress applied is 100 Pa;

b) recovery

The recovery has been measured once a second for a maximum of seconds according to the recovery time calculated in [2]. The shear stress applied is 0 Pa.

At the end of the test the software calculates the recoverable compliance, measured in $Pa^{-1}$, vs time, measured in seconds.

EXAMPLE 1

**Procedure for the preparation of the spherical adduct**

Microspheroidal $MgCl_2$.2.1 $C_2H_5OH$ adduct has been prepared according to Example 1 of European patent application 728769.

**Procedure for the preparation of the solid catalyst component**

The solid catalyst component has been prepared according to Example 1 of European patent application 728769.

**Prepolymerization treatment**

Before introducing the solid catalyst component described above into the polymerization reactors, it has been contacted with triethylaluminum (TEAL) and dicyclopentyldimethoxysilane (DCPMS, D donor) in a ratio reported on Table 2.

Then, the resulting mixture is subjected to prepolymerization by maintaining it in suspension in liquid propylene at 20 °C for about 5 minutes before introducing it into the first polymerization reactor.

**Polymerization**

Into a first gas phase polymerization reactor a propylene ethylene copolymer is produced by feeding in a continuous and constant flow the prepolymerized catalyst system, hydrogen (when used as molecular weight regulator) propylene and ethylene in the gas state.

The polymer produced in the first reactor is discharged in a continuous flow and, after having been purged of unreacted monomers, is introduced, in a continuous flow, into a second gas phase polymerization reactor, together with quantitatively constant flows of hydrogen (when used), 1-butene, ethylene and propylene in the gas state.

The polymer particles exiting the second reactor are subjected to a steam treatment to remove the reactive monomers and volatile substances, and then dried.

The main polymerization conditions are reported in Table 3. The polymer features have been reported on Table 4.

Table 3

| | | Example 1 |
|---|---|---|
| catalyst feed | g/h | 10 |
| TEAL/solid catalyst component weight ratio | g/g | 4.0 |
| TEAL/DCPMS weight ratio | g/g | 4.0 |
| first gas phase reactor | | |
| Polymerisation temperature | °C | 70 |

(continued)

| | | |
|---|---|---|
| first gas phase reactor | | |
| Pressure | barg | 18.0 |
| Residence time | min | 53 |
| C2 | wt% | 3.2 |
| H2/C3 | mol/mol | 0.007 |
| C2/(C2+C3) | mol/mol | 0.032 |
| split first reactor (amount A) | wt% | 35 |
| second gas phase reactor | | |
| Polymerisation temperature | °C | 75 |
| Pressure | barg | 16.0 |
| Residence time | min | 52 |
| H2/C3 | mol/mol | 0.022 |
| C2/C2+C3 | mol/mol | 0.041 |
| C4/C4+C3 | mol/mol | 0.18 |
| split second reactor (amount B) | wt% | 65 |
| C2=ethylene; C3=propylene; C4=1-butene; H2=hydrogen | | |

Comparative Example 2 is a commercial product sold by Lyondellbasell having the features reported in Table 4 and being produced with a catalyst with diisobutylphthalate instead of 9,9-bis(methoxymethyl)fluorene as internal donor.

Recovery compliance curves of both Example 1 and Comparative Example 2 are reported in Figure 1. The maximum value of the two curves between 800 and 1200 seconds is reported in Table 4.

Table 4

| | | Example 1 | Comparative Example 2 |
|---|---|---|---|
| | | | |
| MFR | g/10 min | 5.9 | 5.3 |
| C2 content (IR) in A | wt% | 3.2 | 3.3 |
| Split first reactor (amount A) | wt% | 35 | 35 |
| C2 content (IR) total | wt% | 3.2 | 3.3 |
| C4 content (IR) total | wt% | 6.6 | 5.9 |
| C2/C4 | | 0.48 | 0.56 |
| Xylene Soluble 0°/25° | wt% | 9.5 | 8.7 |
| Tm | °C | 132.4 | 130.5 |
| Mw/Mn | | >4 | >4 |
| | | | |
| SIT | °C | 105 | 105 |
| Haze | % | 0.17 | 0.20 |
| | | | |
| Maximum recoverable compliance between 800 and 1200 s | 1/Pa | $56 \times 10^{-5}$ | $78 \times 10^{-5}$ |

Sample of the obtained films have been subjected to a corona treatment and then the surface tension has been

measured at different time. The results are reported in Table 4.

Table 4

| | | Example 1 | Comparative Example 2 |
|---|---|---|---|
| Surface tension after corona treatment | mN/m | | |
| After 9 day | | 45 | 44 |
| After 14 days | | 45 | 44 |
| After 21 days | | 45 | 42 |
| After 27 days | | 44 | 42 |
| After 56 days | | 43 | 40 |

From Table 4 clearly results that the polyolefin composition of the disclosure shows higher surface tension with respect to Comparative Example 2.

## Claims

**1.** A polyolefin composition comprising:

A) from 19 wt% to 50 wt% of a propylene ethylene copolymer having an ethylene derived units content ranging from 1.5 wt% to 6.0 wt%;
B) from 50 wt% to 81 wt% of a propylene ethylene 1-butene terpolymer having an ethylene derived units content ranging from 1.5 wt% and 6.0 wt% and 1-butene derived units content of between 4.8 wt% and 12.4 wt%;

the sum of the amount of component A) and B) being 100;
the composition being **characterized by** the following features:

- the ratio C2wt%/C4wt% is comprised between 0.22 and 3.0, where C2wt% is the weight per cent of ethylene derived units and C4wt% is the weight per cent of 1-butene derived units;
- the content of xylene soluble fraction at 25°C is comprised between 2 and 15 wt%;
- molecular weight distribution (MWD), expressed in terms of Mw/Mn, greater than 4.0;
- recoverable compliance at 200°C having a maximum value between 800 and 1200 seconds lower than $65x10^{-5}$ $Pa^{-1}$.

**2.** The polyolefin composition according to claim 1 wherein component A) ranges from 25 wt% to 42 wt% and component B) ranges from 58 wt% to 75 wt%.

**3.** The polyolefin composition according to claims 1 or 2 wherein the ethylene derived units content in component A) ranges from 2.6 wt% to 5.2 wt%.

**4.** The polyolefin composition according to anyone of claims 1-3 wherein the ethylene derived units content in component B) ranges from 1.9 wt% to 4.8 wt% and the 1-butene derived units content ranges from 5.1 wt% to 10.5 wt%.

**5.** The polyolefin composition according to anyone of claims 1-4 wherein the recoverable compliance at 200°C has a maximum value between 800 and 1200 seconds lower than $60x10^{-5}$ $Pa^{-1}$.

**6.** The polyolefin composition according to anyone of claims 1-5 wherein the ethylene derived units content ranges from 2.5 wt% to 3.9 wt%.

**7.** The polyolefin composition according to anyone of claims 1-6 wherein the 1-butene derived units content ranges from 5.3 wt% to 6.9 wt%.

**8.** The polyolefin composition according to anyone of claims 1-7 wherein the melting temperature is lower than 136.8 °C.

**9.** The polyolefin composition according to anyone of claims 1-8 wherein the seal initiation temperature (SIT) is comprised between 90 and 109 °C.

**10.** A film comprising the polyolefin composition according to anyone of claims 1-9.

**11.** A biaxially oriented (BOPP) films comprising the polyolefin composition according to anyone of claims 1-9.

**Patentansprüche**

**1.** Eine Polyolefinzusammensetzung, die Folgendes beinhaltet:

A) zu 19 Gew.-% bis 50 Gew.-% ein Propylen-Ethylen-Copolymer mit einem Gehalt an von Ethylen abgeleiteten Einheiten im Bereich von 1,5 Gew.-% bis 6,0 Gew.-%;
B) zu 50 Gew.-% bis 81 Gew.-% ein Propylen-Ethylen-1-Buten-Terpolymer mit einem Gehalt an von Ethylen abgeleiteten Einheiten im Bereich von 1,5 Gew.-% und 6,0 Gew.-% und einem Gehalt an von 1-Buten abgeleiteten Einheiten zwischen 4,8 Gew.-% und 12,4 Gew.-%;

wobei die Summe der Menge von Komponente A) und B) 100 beträgt;
wobei die Zusammensetzung durch die folgenden Merkmale gekennzeichnet ist:

- das Verhältnis C2Gew.-%/C4Gew.-% liegt zwischen 0,22 und 3,0, wobei C2Gew.-% das Gewichtsprozent der von Ethylen abgeleiteten Einheiten ist und C4Gew.-% das Gewichtsprozent der von 1-Buten abgeleiteten Einheiten ist;
- der Gehalt der bei 25 °C in Xylol löslichen Fraktion liegt zwischen 2 und 15 Gew.-%;
- Molmassenverteilung (MMV), ausgedrückt als Mw/Mn, von mehr als 4,0;
- rückgewinnbare Compliance bei 200 °C mit einem Höchstwert von zwischen 800 und 1200 Sekunden weniger als 65 x $10^{-5}$ $Pa^{-1}$.

**2.** Polyolefinzusammensetzung gemäß Anspruch 1, wobei Komponente A) im Bereich von 25 Gew.-% bis 42 Gew.-% liegt und Komponente B) im Bereich von 58 Gew.-% bis 75 Gew.-% liegt.

**3.** Polyolefinzusammensetzung gemäß Ansprüchen 1 oder 2, wobei der Gehalt an von Ethylen abgeleiteten Einheiten in Komponente A) im Bereich von 2,6 Gew.-% bis 5,2 Gew.-% liegt.

**4.** Polyolefinzusammensetzung gemäß einem der Ansprüche 1-3, wobei der Gehalt an von Ethylen abgeleiteten Einheiten in Komponente B) im Bereich von 1,9 Gew.-% bis 4,8 Gew.-% liegt und der Gehalt an von 1-Buten abgeleiteten Einheiten im Bereich von 5,1 Gew.-% bis 10,5 Gew.-% liegt.

**5.** Polyolefinzusammensetzung gemäß einem der Ansprüche 1-4, wobei die rückgewinnbare Compliance bei 200 °C einen Höchstwert von zwischen 800 und 1200 Sekunden weniger als 60 x $10^{-5}$ $Pa^{-1}$ aufweist.

**6.** Polyolefinzusammensetzung gemäß einem der Ansprüche 1-5, wobei der Gehalt an von Ethylen abgeleiteten Einheiten im Bereich von 2,5 Gew.-% bis 3,9 Gew.-% liegt.

**7.** Polyolefinzusammensetzung gemäß einem der Ansprüche 1-6, wobei der Gehalt an von 1-Buten abgeleiteten Einheiten im Bereich von 5,3 Gew.-% bis 6,9 Gew.-% liegt.

**8.** Polyolefinzusammensetzung gemäß einem der Ansprüche 1-7, wobei die Schmelztemperatur weniger als 136,8 °C beträgt.

**9.** Polyolefinzusammensetzung gemäß einem der Ansprüche 1-8, wobei die Temperatur des Einsetzens der Versiegelung (SIT) zwischen 90 und 109 °C liegt.

**10.** Eine Folie, die die Polyolefinzusammensetzung gemäß einem der Ansprüche 1-9 beinhaltet.

**11.** Eine biaxial gereckte (BOPP) Folie, die die Polyolefinzusammensetzung gemäß einem der Ansprüche 1-9 beinhaltet.

## Revendications

**1.** Composition de polyoléfine comprenant :

A) de 19 % en poids à 50 % en poids d'un copolymère de propylène-éthylène ayant une teneur en unités dérivées de l'éthylène dans une plage allant de 1,5 % en poids à 6,0 % en poids ;
B) de 50 % en poids à 81 % en poids d'un terpolymère de propylène-éthylène-1-butène ayant une teneur en unités dérivées de l'éthylène dans une plage allant de 1,5 % en poids à 6,0 % en poids et une teneur en unités dérivées du 1-butène comprise entre 4,8 % en poids et 12,4 % en poids ;

la somme de la quantité de composant A) et B) étant de 100 ;
la composition étant **caractérisée par** les caractéristiques suivantes :

- le rapport % en poids de C2/% en poids de C4 est compris entre 0,22 et 3,0, où % en poids de C2 est le pourcentage en poids d'unités dérivées de l'éthylène et % en poids de C4 est le pourcentage en poids d'unités dérivées du 1-butène ;
- la teneur en fraction soluble dans le xylène à 25 °C est comprise entre 2 et 15 % en poids ;
- une distribution des poids moléculaires (MWD), exprimée en termes de Mw/Mn, supérieure à 4,0 ;
- une complaisance récupérable à 200 °C ayant une valeur maximale comprise entre 800 et 1 200 secondes inférieure à $65 \times 10^{-5}$ $Pa^{-1}$.

**2.** Composition de polyoléfine selon la revendication 1 dans laquelle le composant A) est situé dans une plage allant de 25 % en poids à 42 % en poids et le composant B) est situé dans une plage allant de 58 % en poids à 75 % en poids.

**3.** Composition de polyoléfine selon les revendications 1 ou 2 dans laquelle la teneur en unités dérivées de l'éthylène dans le composant A) est située dans une plage allant de 2,6 % en poids à 5,2 % en poids.

**4.** Composition de polyoléfine selon l'une quelconque des revendications 1 à 3 dans laquelle la teneur en unités dérivées de l'éthylène dans le composant B) est située dans une plage allant de 1,9 % en poids à 4,8 % en poids et la teneur en unités dérivées du 1-butène est située dans une plage allant de 5,1 % en poids à 10,5 % en poids.

**5.** Composition de polyoléfine selon l'une quelconque des revendications 1 à 4 dans laquelle la complaisance récupérable à 200 °C a une valeur maximale comprise entre 800 et 1 200 secondes inférieure à $60 \times 10^{-5}$ $Pa^{-1}$.

**6.** Composition de polyoléfine selon l'une quelconque des revendications 1 à 5 dans laquelle la teneur en unités dérivées de l'éthylène est située dans une plage allant de 2,5 % en poids à 3,9 % en poids.

**7.** Composition de polyoléfine selon l'une quelconque des revendications 1 à 6 dans laquelle la teneur en unités dérivées du 1-butène est située dans une plage allant de 5,3 % en poids à 6,9 % en poids.

**8.** Composition de polyoléfine selon l'une quelconque des revendications 1 à 7 dans laquelle la température de fusion est inférieure à 136,8 °C.

**9.** Composition de polyoléfine selon l'une quelconque des revendications 1 à 8 dans laquelle la température d'initiation de scellement (SIT) est comprise entre 90 et 109 °C.

**10.** Film comprenant la composition de polyoléfine selon l'une quelconque des revendications 1 à 9.

**11.** Film à orientation biaxiale (BOPP) comprenant la composition de polyoléfine selon l'une quelconque des revendications 1 à 9.

FIG 1

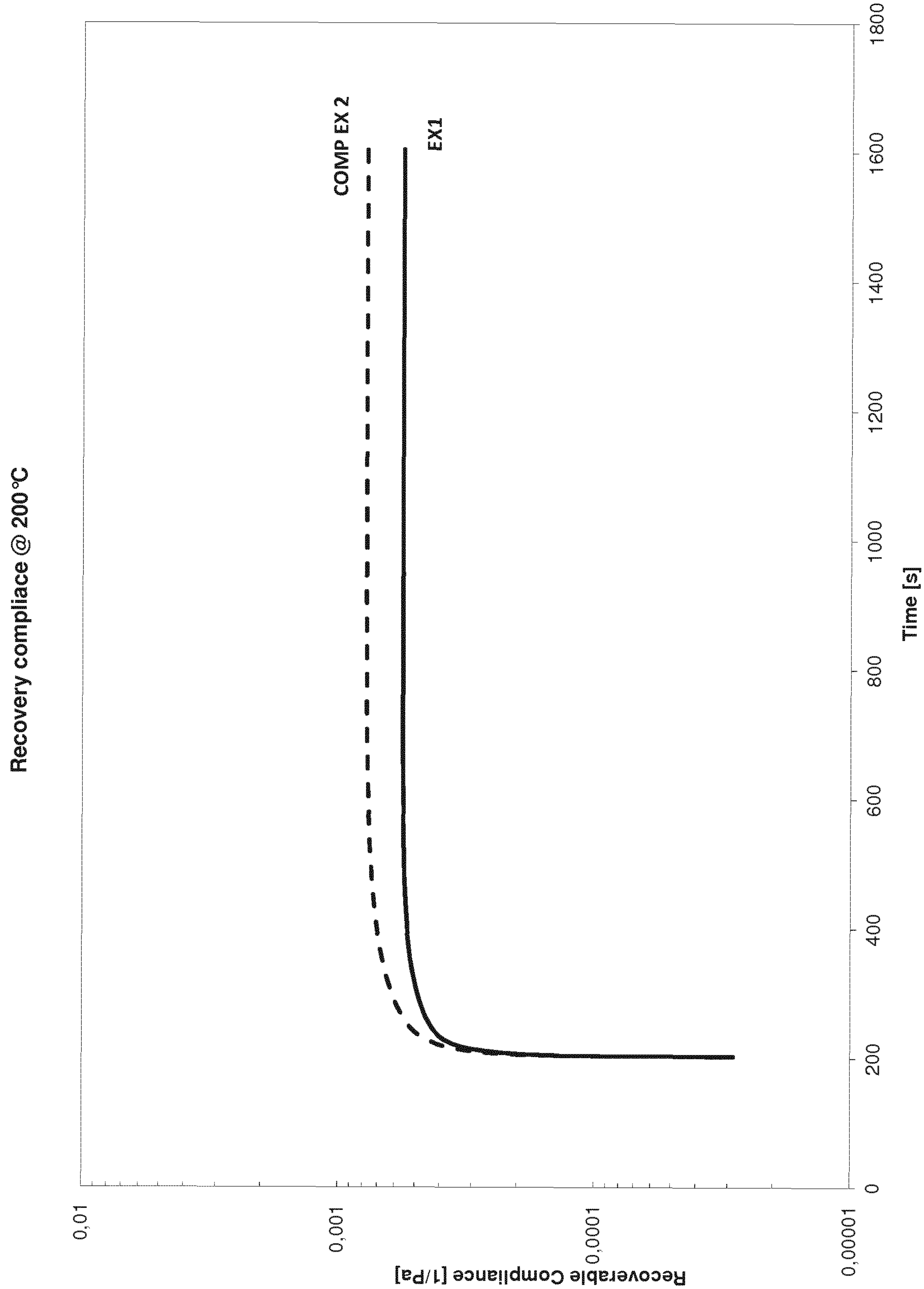
Recovery compliace @ 200°C
COMP EX 2
EX1
Recoverable Compliance [1/Pa]
0,01
0,001
0,0001
0,00001
Time [s]
0
200
400
600
800
1000
1200
1400
1600
1800

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6221984 B
- WO 2009019169 A
- WO 2013174778 A
- EP 361493 A
- EP 728769 A
- US 4399054 A
- US 4469648 A